# EUROPEAN PATENT SPECIFICATION

(11) **EP 1 368 997 B1**
(45) Date of publication and mention of the grant of the patent: **11.01.2006**
(21) Application number: 02704902.2
(22) Date of filing: 11.03.2002
(51) Int. Cl.: H05B 33/08

(54) **ELECTRICAL APPARATUS AND CORRESPONDING METHOD**
ELEKTRISCHES GERÄT UND DAZUGEHÖRIGES VERFAHREN
APPAREIL ELECTRIQUE ET PROCEDE CORRESPONDANT

(30) Priority: 10.03.2001 GB 0105992; 06.04.2001 GB 0108667
(43) Date of publication of application: 10.12.2003
(73) Proprietor: SIEMENS PLC, Bracknell, Berkshire RG12 8FZ (GB)
(72) Inventor: MANSTON, Keith, Poole, Dorset BH17 7YU (GB); COX, Paul, Poole, Dorset BH17 7DQ (GB)
(74) Representative: Morgan, Marc
(86) International application number: PCT/GB2002/000963
(87) International publication number: WO 2002/074017

(56) References cited:
- WO-A-98/49872
- CA-A- 2 225 005
- FR-A- 2 724 749
- US-A- 6 118 259
- US-A- 6 150 771

## Description

The invention relates to electrical apparatus for use with a non incandescent light emitter, for example a light emitting diode, (LED) which may be used in a traffic signal system or the like to replace a incandescent lamp. The invention also relates to a traffic signal system including the apparatus and at least one non-incandescent light emitter as well as monitor equipment. Furthermore, the invention relates to a method for sensing the failure of a non-incandescent light emitter in a traffic lights system.

According to US patent 6,150,771 in traffic signals incandescent lamps are traditionally used to generate the light signal used to control traffic. An alternative to incandescent traffic signals are traffic signals which use light emitting diodes (LEDs). Given the cost of replacing light systems it will be appreciated that it is desirable to upgrade the current light sources in the lights to LEDs rather than to replace the whole lighting system. Replacement of incandescent lamps by LEDs however leads to several technical problems. In particular, LED arrays replacing older incandescent lamps must be compatible with the older incandescent load switch technology and its associated conflict monitors as described in US patent 6,150,771. The most significant problem according to US patent 6,150,771 is to operate LED arrays to provide an electrical load which is nearly a resistive load which would allow smooth transfer of power from the incoming power line to the traffic signal load. Among other problems addressed by US patent 6,150,771 is that of compatibility arising in the case of failed state of any traffic signal. Traditional monitors sense voltage across a signal and, as such, are only usable with a signal provided by incandescent lamps, unless specific modifications are made to signals provided by other types of light emitters. To overcome this, US 6,150,771 describes an interface circuit which includes an open filament condition circuit (OFC) for indicating an open circuit condition to a conflict monitor when the input voltage is high and the feedback current drops by a certain amount. When this happens the OFC terminates a signal operation and presents such a condition to the conflict monitor as a failed incandescent signal. A failed circuit is introduced which senses the drop in output current due to the LED signal failure. If the output current drops by at least 50% for several seconds the failure circuits shorts a fuse. The blown fuse then permanently indicates to the conflict monitor a failed signal, that is infinite input impedance.

According to US Patent 6,150,771, the compatibility with a conflict monitor is achieved by certain circuits which sense a drop in the current to the LED and which always change the input current to achieve an almost resistive load. This implies a current source which provides an input current that has an envelope that is substantially the same as the input voltage having a sinusoidal profile.

US 6,118,259 discloses apparatus in accordance with the precharacterising clause of the main claim for replacing incandescent light sources by non-incandescent ones. It controls the current drawn by the non-incandescent replacement light source to avoid erroneous detection of failure.

The invention provides apparatus and a method as recited in the independent claims. Preferred features are provided by the dependent claims.

Specific embodiments of the invention will now be described, by way of example only, with reference to the drawings in which:
Figure 1 shows a schematic block diagram of apparatus in accordance with the invention connected to a light emitter;
Figure 2 shows a typical incandescent lamp current and voltage;
Figure 3 shows by way of example a current and a modified current of a non-incandescent light emitter; and
Figure 4 shows another example of a current profile and a modified current profile of a non-incandescent light emitter.

For ease of reference, like-features in the drawings bear the same reference numerals.

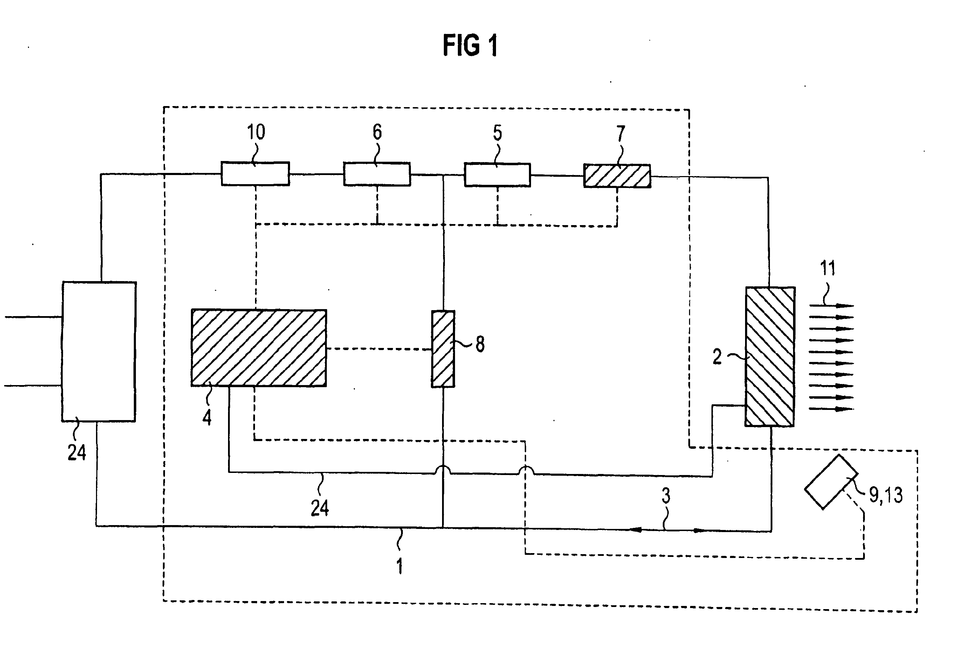

As shown in figure 1, apparatus for modifying an electric current comprising electrical device 1 is connected to an LED array 2 which serves as a light emitter replacing normally used incandescent lamps in signal lamps or traffic light systems. The electrical device 1 comprises an electrical circuit breaker 10 connected to a second current sensor 6 connected to a first current sensor 5 connected to a current limiter 7, which is connected to the LED array 2. A current sink 8 is connected from a junction between current sensor 6 and current sensor 5 and an end of the LED array 2. The LED array 2 includes a driver not shown.

Furthermore the electrical device 1 comprises a control device 4 to which electrical circuit breaker 10, first current sensor 5, second current sensor 6, current limiter 7 and current sink 8 are connected by a control line shown as a dashed line. A failure detecting sensor 9 comprising a light detecting sensor 13 is located so as to sense light 11 emitted by the LED array 2. The light detecting sensor 13 is connected to the control device 4 by a control line shown as a dashed line. The electrical device 1 is connected to monitor equipment 24, in this case, a traffic controller or lamp monitor of a traffic signal system (not shown).

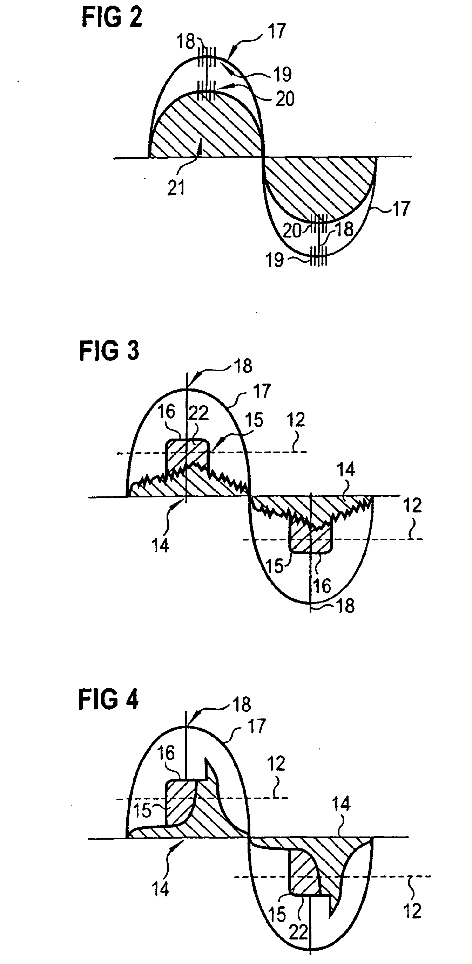

The first current sensor 5 measures the current 3 which is drawn by the LED array 2 and its drive circuit. The current waveform is shown as the outline labelled 14 in figures 3 and 4. Using this measured current 14, the control device 4 adjusts the current sink 8 to increase the overall current drawn from the monitor equipment 24 and the current limiter 7 to constrain the current 3, so that the original current waveform 14 (see fig 2-4) is modified to a modified current waveform 15. Thus, as the current 14 sensed by sensor 5 crosses a predetermined threshold the current sink 8 is varied to increase the current drawn. As the current flowing through the array 2 falls back to the threshold, the current sink 8 returns to its original value as the current drawn decreases. The operation is the same for the negative part of the cycle. In this way the overall current detected by the monitor 24 is raised to a level that permits it to be effectively monitored. In this embodiment of the electrical device 1, the original current 14 is modified to the extent necessary to allow the existing monitor equipment 24 to monitor the modified current 15, thus maintaining the lower power consumption properties of LEDs.

The second current sensor 6 provides a feedback of the modified current 15 of the LED system 2, allowing the control device 4 to further adjust the current sink 8 and the current limiter 7 to maintain a desired, modified current 15. The use of this further component is shown in Fig 4, here the current 14 drawn by the LED array and driver is greater than the minimum threshold that can be monitored by the equipment 24. The control device 4 controls the limiter 7 to limit the current drawn by the LED array 2 to maintain the plateau 16 of the total current drawn 15.

It is clear that in any particular implementation of the electrical device 1, the second current sensor 6 may or may not be included depending on the complexity of the LED systems current 14 and the ability of the control device 4 to condition the modified current 15 without this feedback.

The light detecting sensor 13 detects the light 11 emitted by the LED array 2 for assessment by the control device 4. Should the LED array's output fall below a defined threshold, the control device 4 totally extinguishes the LED array 2 by operating the electrical circuit breaker 10 (in this case a fuse). The result is that current 3 reduces to zero allowing the monitor equipment 24 to detect the failure and take appropriate action. In this way, the LED array 2 mimics the behaviour of an incandescent lamp when a lamp blows and the current falls to zero.

Figure 2 shows a typical incandescent lamp current 21 and voltage profile 17. Both supply the voltage waveform and lamp current waveform have a sinusoidal shape with the same phase angle. In this case the maximum value of the supply voltage waveform 18 and lamp current measured over time coincide. Around these maximum values of supply voltage 18 and lamp current (either positive or negative maximum values) a number of measurement points 19, 20 are provided for detecting voltage and current. When measuring the lamp current, information is provided whether a failure of the lamp occurs or not. If the signal lamp should be on, then the current value around the maximum will be flowing and have a certain value. If no current is measured at the measurement points 20 then a lamp failure condition is indicated.

Figure 3 shows an example of supply voltage waveform 17 and non-modified electrical current waveform 14 of the LED array 2 having a large number of peaks and troughs superimposed on a generally sinusoidal waveform. This original curent waveform 14 shows a far more complex behaviour than the sinusoidal current waveform 21 of an incandescent lamp according to figure 2. The monitor equipment 24 of a traffic signal system is designed for use with incandescent lamps and thus expects a relatively smooth sinusoidal waveform having a substantial amplitude and thus by using the electrical device the current waveform 14 is modified to modified current waveform 15. This modified current waveform 15 shows an almost rectangular shape with a plateau like area 16 above a certain pre-determined current threshold 12. The plateau like area 16 is provided where the current measurement points 20 of the monitor equipment 24 are located, that is to say about the peak of the applied voltage. So the modified current 15 shows a maximum current value 22 which is above the pre-determined current threshold 12. The current signal 15 consumed by the LED array 2 and controlled by the control device 4 is therefore detectable by already installed monitoring equipment 24. As soon as a failure of the LED array 2 is detected, the current through the LED array 2 is interrupted and a failure signal of the same type as it is provided by incandescent lamp is provided to the monitor equipment 24.

Figure 4 shows another example of a modified current waveform 15 having a plateau like area 16 above a predetermined current threshold 12. In figure 3, the original electric current waveform 14 has a maximum current value below the pre-described current threshold 12. The original electrical current waveform 14 of figure 4 has a maximum value which is above the current threshold 12 but placed outside the area in which the current measurement points 20 are located.

The current waveform is modified by the apparatus to provide a modified current waveform having a measurable plateau 16 centred about the peak of the voltage and hence lying within the measurement points.

In an alternative embodiment of the invention, an additional control line 24 is provided between the control device 4 and the LED array 2. The control device 4 places a control signal on this line in response to which the LED array 2 is driven at different light output levels. The light level is varied in the following manner. When the traffic light is switched "on" the control device 4 gradually increases the light level produced by the LED array 2. Similarly when the traffic light is to be switched off, the control device 4 gradually decreases the light level produced by the LED array 2.

Gradually increasing or decreasing the light intensity has a number of beneficial effects. Firstly, the light more closely mimics the performance of an incandescent lamp to a person viewing the light. Secondly, it is believed that a gradual variation may have a positive effect on the very important issues of safety. In the case of a road user, for example a rapid light change can have a startling effect. As a user approaches a set of traffic lights, the user will not only look at the lights but rear and side mirrors, pavements other road junctions. All these actions take place in a matter of split-seconds in an instinctive manner. Thus, it will be appreciated that a light that instantaneously switches may be perceived as a change which has been missed while attention was given elsewhere. This may have the effect of startling the driver into applying the vehicle's brakes more harshly than is warranted. A skid or even an accident may be caused by this action. Another example, of startling the user into an unwarranted action is the situation where the user is waiting at lights for their change but this time the effect may be to excite the driver into starting off more rapidly then is warranted.

A further, more subtle effect, is that drivers when subjected to rapidly changing traffic lights may become stressed or confused. Stress or confusion can cause erratic driving again having an impact on safety.

## Claims

1. Apparatus (1) for modifying an electrical current (3) drawn by at least one non-incandescent light emitter (2) which apparatus comprising
- a control device (4)
- a first current sensor (5) for measuring the electrical current flowing through the non-incandescent light emitter (2)
- a current limiter (7) to constrain the electrical current (3) drawn by the non-incandescent light emitter (2)
- a current sink (8) to increase the electrical current (3) consumed by the non-incandescent light emitter (2)
- a failure detecting sensor (9)
- an electrical circuit breaker (10) for removing the electrical current (3) drawn by the non-incandescent light emitter (2)
wherein
- the first current sensor (5), said current limiter (7), the current sink (8), the failure detecting sensor (9) and the electrical circuit breaker (10) are connected to the control device (4),
- the control device (4) operates the current sink (8) and the current limiter (7) to modify the measured electrical current wareform (14) to a modified current waveform (15) having a maximum current value (22) which is above a predetermined current threshold (12)
- the control device (4) causes the circuit breaker (10) to remove the current, if the failure detecting sensor (9) provides a sensor signal indicating that the light emission of the non-incandescent light emitter (2) falls below a predetermined light threshold, **characterised in that** the control device (4) operates the current limiter (7) and the current sink (8) to modify the current waveform (14) to show a substantially plateau like area around the maximum current value (22).

2. Apparatus (1) according to claim 1, wherein the failure detecting sensor (9) comprises a light detecting sensor (13) for detecting the light emitted by the non-incandescent light emitter (2).

3. Apparatus according to claim 1, wherein the failure detecting sensor (9) comprises a failure circuit, which senses a drop in the consumed current (3) of the non-incandescent light emitter (2).

4. Apparatus according to claim 2 or 3, wherein the light threshold is 80% of the value of light emission for normal operation of the non-incandescent light emitter (2).

5. Apparatus according to any of the preceding claims, wherein the circuit breaker (10) is a replaceable element.

6. Apparatus according to any of the preceding claims, wherein the circuit breaker (10) is a fuse.

7. Apparatus according to any of the preceding claims, wherein the control device (4) is an electronic circuit including at least one microprocessor.

8. Apparatus according to any of the preceding claims, comprising a second current sensor (6) for sensing the modified consumed current (15) of the non-incandescent light emitter (2) and being connected to the control device (4).

9. Apparatus according to any of the preceding claims wherein said modified current waveform (15) has a substantially rectangular or substantially trapezoidal shape.

10. Traffic signal system comprising an apparatus according to any of the preceding claims, further comprising at least one non-incandescent light emitter (2) and a monitoring equipment, which is connected to the electrical device (1) for receiving and processing a lamp failure signal.

11. Traffic signal system according to claim 9, wherein the at least one non-incandescent light emitter (2) comprises a light emitting diode (LED).

12. Traffic signal system according to claim 11 wherein the at least one non-incandescent light emitter (2) comprises a number of LEDs in the range 8 to 350 LEDs.

13. Traffic signal system according to anyone of claims 10 to 12, wherein the at least one non-incandescent light emitter (2) is connected to a drive circuit array.

14. Method for sensing the failure of a non-incandescent light emitter (2) in a traffic light system comprising the following steps
- measuring the electrical current (14) flowing through the non-incandescent light emitter (2),
- modifying the measured current waveform (14) to a modified current waveform (15), which has a maximum value above a pre-determined current threshold, detectable by a monitoring equipment (24) situated in the electrical current path.
- providing a failure signal, if the light emission of the non-incandescent light emitter (2) falls below a predetermined light threshold,
- in the occurrence of the failure signal, interrupting the electrical current (3),
**characterised in that** the current waveform (4) is modified to show a substantially plateau like area (16) around a maximum value (18) of the supply voltage waveform (17).

15. Method according to claim 14 in which light (11) emitted by the non-incandescent light emitter (2) is sensed and the failure signal is provided if the light (11) emitted falls under a predetermined threshold.

16. Method according to claim 14 in which the current (3) through the non-incandescent light emitter (2) is sensed and the failure signal is provided if the current (3) drops under a value which corresponds to a pre-determined threshold of the light (11) emitted.

## Patentansprüche

1. Gerät (1) zur Modifizierung eines elektrischen Stroms (3), der durch mindestens ein Leuchtmittel (2), bei dem es sich nicht um eine Glühlampe handelt, gezogen wird, wobei dieses Gerät Folgendes beinhaltet:
- ein Steuergerät (4),
- einen ersten Stromsensor (5) zur Messung des elektrischen Stroms, der durch das Leuchtmittel (2) fließt,
- ein Strombegrenzer (7) zur Begrenzung des elektrischen Stroms (3), der durch das Leuchtmittel (2) fließt,
- eine Stromsenke (8) zur Erhöhung des elektrischen Stroms (3), der durch das Leuchtmittel (2) verbraucht wird,
- ein Ausfallerfassungssensor (9),
- ein elektrischer Leistungsschalter (10) zur Trennung des elektrischen Stroms (3), der vom Leuchtmittel (2) gezogen wird,
wobei
- der erste Stromsensor (5), besagter Strombegrenzer (7), die Stromsenke (8), der Ausfallerfassungssensor (9) und der elektrische Leistungsschalter (10) an das Steuergerät (4) angeschlossen sind,
- das Steuergerät (4) die Stromsenke (8) und den Strombegrenzer (7) so ansteuert, dass sie die gemessene Stromwellenform (14) in eine modifizierte Stromwellenform (15) ändern, die einen Stromhöchstwert (22) hat, der oberhalb eines vorher festgelegten Schwellenwertes (12) liegt,
- das Steuergerät (4) den Leistungsschalter (10) veranlasst, den Stromfluss zu trennen, wenn der Ausfallerfassungssensor (9) ein Sensorsignal liefert, das meldet, dass die Lichtemission des Leuchtmittels (2) unter einen vorher festgelegten Lichtschwellenwert fällt, **dadurch gekennzeichnet, dass** das Steuergerät (4) den Strombegrenzer (7) und die Stromsenke (8) so ansteuert, dass die Stromwellenform (14) dergestalt geändert wird, dass sie einen im Wesentlichen plateauähnlichen Bereich um den Stromhöchstwert (22) herum aufweist.

2. Gerät (1) nach Anspruch 1, bei dem der Ausfallerfassungssensor (9) einen Lichterfassungssensor (13) zur Erfassung des vom Leuchtmittel (2), bei dem es sich nicht um eine Glühlampe handelt, emittierten Lichtes beinhaltet.

3. Gerät nach Anspruch 1, bei dem der Ausfallerfassungssensor (9) einen Ausfallschaltkreis beinhaltet, der ein Sinken des vom Leuchtmittel (2) verbrauchten Stroms (3) erfasst.

4. Gerät nach Anspruch 2 oder 3, bei dem der Lichtschwellenwert 80% des Wertes der Lichtemission im Normalbetrieb des Leuchtmittels (2) beträgt.

5. Gerät nach einem der vorhergehenden Ansprüche, bei dem der Leistungsschalter (10) ein austauschbares Element ist.

6. Gerät nach einem der vorhergehenden Ansprüche, bei dem der Leistungsschalter (10) eine Sicherung ist.

7. Gerät nach einem der vorhergehenden Ansprüche, bei dem das Steuergerät (4) ein elektronischer Schaltkreis, einschließlich mindestens eines Mikroprozessors, ist.

8. Gerät nach einem der vorhergehenden Ansprüche, die einen zweiten Stromsensor (6) zur Erfassung des modifizierten verbrauchten Stroms (15) des Leuchtmittels (2) beinhaltet, der an das Steuergerät (4) angeschlossen ist.

9. Gerät nach einem der vorhergehenden Ansprüche, bei dem die modifizierte Stromwellenform (15) eine im Wesentlichen rechteckige oder im Wesentlichen trapezartige Form hat.

10. Verkehrssignalanlage, die ein Gerät beinhaltet, das einem der vorhergehenden Ansprüche entspricht, und weiterhin mindestens ein Leuchtmittel (2) beinhaltet, bei dem es sich nicht um eine Glühlampe handelt, sowie ein Überwachungsgerät, das an das elektrische Gerät (1) angeschlossen ist, um ein Lampenausfallsignal zu empfangen und zu verarbeiten.

11. Verkehrssignalanlage nach Anspruch 9, bei der das mindestens eine Leuchtmittel (2), bei dem es sich nicht um eine Glühlampe handelt, eine Leuchtdiode (LED) beinhaltet.

12. Verkehrssignalanlage nach Anspruch 11, bei der das mindestens eine Leuchtmittel (2) eine Reihe von LEDs in einer Größenordnung von 8 bis 350 LEDs beinhaltet.

13. Verkehrssignalanlage nach einem der Ansprüche 10 bis 12, bei der das mindestens eine Leuchtmittel (2), bei dem es sich nicht um eine Glühlampe handelt, an ein Treiberschaltkreis-Feld angeschlossen ist.

14. Verfahren zur Erfassung des Ausfalls eines Leuchtmittels (2), bei dem es sich nicht um eine Glühlampe handelt, in einer Verkehrssignalanlage, das folgende Schritte beinhaltet:
- Messen des elektrischen Stroms (14), der durch das Leuchtmittel (2) fließt,
- Ändern der gemessenen Stromwellenform (14) in eine modifizierte Wellenform (15), die einen Höchstwert hat, der oberhalb eines vorher festgelegten Stromschwellenwertes liegt, der durch ein Überwachungsgerät (24) erfasst werden kann, das sich im elektrischen Strompfad befindet,
- Bereitstellen eines Ausfallsignals, wenn die Lichtemission des Leuchtmittels (2) unter einen vorher festgelegten Schwellenwert fällt,
- bei Eintritt des Ausfallsignals Unterbrechen des elektrischen Stroms (3),**dadurch gekennzeichnet, dass** die Stromwellenform (14) so modifiziert wird, dass sie einen im Wesentlichen plateauähnlichen Bereich (16) um einen Höchstwert (18) der Speisespannung-Wellenform (17) herum aufweist.

15. Verfahren nach Anspruch 14, bei dem das vom Leuchtmittel (2) emittierte Licht (11) erfasst und das Ausfallsignal bereitgestellt wird, wenn das emittierte Licht (11) unter einen vorher festgelegten Schwellenwert fällt.

16. Verfahren nach Anspruch 14, bei dem der Strom (3), der durch das Leuchtmittel (2) fließt, erfasst wird und das Ausfallsignal bereitgestellt wird, wenn der Strom (3) unter den Wert fällt, der einem vorher festgelegten Schwellenwert des emittierten Lichts (11) entspricht.

## Revendications

1. Appareil (1) pour modifier un courant électrique (3) sollicité par au moins un émetteur de lumière non incandescente (2), lequel appareil comprend :
- un dispositif de commande (4) ;
- un premier détecteur de courant (5) pour mesurer le courant électrique circulant à travers l'émetteur de lumière non incandescente (2) ;
- un limiteur de courant (7) pour contraindre le courant électrique (3) sollicité par l'émetteur de lumière non incandescente (2) ;
- un puits de courant (8) pour augmenter le courant électrique (3) consommé par l'émetteur de lumière non incandescente (2) ;
- un capteur de détection de défaillance (9) ;
- un disjoncteur électrique (10) pour supprimer le courant électrique (3) sollicité par l'émetteur de lumière non incandescente (2) ;
dans lequel :
- le premier détecteur de courant (5), ledit limiteur de courant (7), le puits de courant (8), le capteur de détection de défaillance (9) et le disjoncteur électrique (10) sont raccordés au dispositif de commande (4) ;
- le dispositif de commande (4) actionne le puits de courant (8) et le limiteur de courant (7) pour modifier la forme d'onde du courant électrique mesuré (14) dans une forme d'onde de courant modifié (15) ayant une valeur de courant maximale (22) qui est supérieure à un seuil de courant prédéterminé (12) ;
- le dispositif de commande (4) fait en sorte que le disjoncteur (10) supprime le courant si le capteur de détection de défaillance (9) fournit un signal de capteur indiquant que l'émission de lumière de l'émetteur de lumière non incandescente (2) descend en dessous d'un seuil de lumière prédéterminé ; **caractérisé en ce que** le dispositif de commande (4) actionne le limiteur de courant (7) et le puits de courant (8) afin de modifier la forme d'onde du courant (14) de manière à présenter une zone ressemblant sensiblement à un plateau à proximité de la valeur de courant maximale (22).

2. Appareil (1) selon la revendication 1, dans lequel le capteur de détection de défaillance (9) comprend un capteur de détection de lumière (13) pour détecter la lumière émise par l'émetteur de lumière non incandescente (2).

3. Appareil selon la revendication 1, dans lequel le capteur de détection de défaillance (9) comprend un circuit de défaillance, qui détecte une diminution dans le courant (3) consommé par l'émetteur de lumière non incandescente (2).

4. Appareil selon l'une quelconque des revendications 2 ou 3, dans lequel le seuil lumineux représente 80 % de la valeur de l'émission de lumière dans le fonctionnement normal de l'émetteur de lumière non incandescente (2).

5. Appareil selon l'une quelconque des revendications précédentes, dans lequel le disjoncteur (10) est un élément remplaçable.

6. Appareil selon l'une quelconque des revendications précédentes, dans lequel le disjoncteur (10) est un fusible.

7. Appareil selon l'une quelconque des revendications précédentes, dans lequel le dispositif de commande (4) est un circuit électronique comprenant au moins un microprocesseur.

8. Appareil selon l'une quelconque des revendications précédentes, comprenant un deuxième détecteur de courant (6) pour détecter le courant consommé modifié (15) de l'émetteur de lumière non incandescente (2) et étant raccordé au dispositif de commande (4).

9. Appareil selon l'une quelconque des revendications précédentes, dans lequel ladite forme d'onde de courant modifié (15) présente une forme sensiblement rectangulaire ou sensiblement trapézoïdale.

10. Système de signalisation routière comprenant un appareil selon l'une quelconque des revendications précédentes, comprenant en outre au moins un émetteur de lumière non incandescente (2) et un dispositif de surveillance, qui est raccordé au dispositif électrique (1) pour recevoir et traiter un signal de défaillance de lampe.

11. Système de signalisation routière selon la revendication 9, dans lequel l'émetteur de lumière non incandescente (2), au moins au nombre d'un, comprend une diode électroluminescente (DEL).

12. Système de signalisation routière selon la revendication 11, dans lequel l'émetteur de lumière non incandescente (2), au moins au nombre d'un, comprend un nombre de DEL de l'ordre de 8 à 350 DEL.

13. Système de signalisation routière selon l'une quelconque des revendications 10 à 12, dans lequel l'émetteur de lumière non incandescente (2), au moins au nombre d'un, est raccordé à un agencement de circuit pilote.

14. Procédé pour détecter la défaillance d'un émetteur de lumière non incandescente (2) dans un système de signalisation routière, comprenant les étapes suivantes :
- mesurer le courant électrique (14) circulant à travers l'émetteur de lumière non incandescente (2) ;
- modifier la forme d'onde du courant mesuré (14) dans une forme d'onde de courant modifié (15) qui présente une valeur maximale supérieure à un seuil de courant prédéterminé, détectable par un dispositif de surveillance (24) situé dans le trajet du courant électrique ;
- fournir un signal de défaillance si l'émission de lumière de l'émetteur de lumière non incandescente (2) descend en dessous d'un seuil lumineux prédéterminé ;
- en présence du signal de défaillance, interrompre le courant électrique (3) ;
**caractérisé en ce que** la forme d'onde du courant (14) est modifiée afin de présenter une zone ressemblant sensiblement à un plateau (16) à proximité d'une valeur maximale (18) de la forme d'onde de tension d'alimentation (17).

15. Procédé selon la revendication 14, dans lequel la lumière (11) émise par l'émetteur de lumière non incandescente (2) est détectée et le signal de défaillance est fourni si la lumière (11) émise descend en dessous d'un seuil prédéterminé.

16. Procédé selon la revendication 14, dans lequel le courant (3) circulant à travers l'émetteur de lumière non incandescente (2) est détecté et le signal de défaillance est fourni si le courant (3) descend en dessous d'une valeur qui correspond à un seuil prédéterminé de la lumière (11) émise.
